# FASCICULE DE BREVET EUROPEEN

(11) **EP 2 218 158 B1**
(45) Date de publication et mention de la délivrance du brevet: **09.12.2020**
(21) Numéro de dépôt: 08857174.0
(22) Date de dépôt: 24.11.2008
(51) Int. Cl.: H02K 21/04, H02K 1/22

(54) **ROTOR DE MACHINE ELECTRIQUE COMPRENANT DES GRIFFES ET STRUCTURES A AIMANT DANS LES ESPACES INTERPOLAIRES**
ROTORANORDNUNG FÜR EINE ELEKTRISCHE MASCHINE KLAUENPOLE UND MAGNETSTRUKTUREN IN DEN POLENLUECKEN AUFWEISEND
ROTOR ASSEMBLY FOR AN ELECTRICAL MACHINE COMPRISING CLAW-POLES AND MAGNETSTRUCTURES IN INTERPOLAR SPACES

(30) Priorité: 26.11.2007 FR 0759297
(43) Date de publication de la demande: 18.08.2010
(73) Titulaire: Valeo Equipements Electriques Moteur, 94046 Créteil Cedex (FR)
(72) Inventeur: GAS, Olivier, F-75017 Paris (FR); BILTERYST, Pierre-Yves, F-62170 Brimeux (FR); PFLEGER, Alexandre, F- 67320 Weyer (FR)
(74) Mandataire: de Lambilly Delorme, Marie Pierre
(86) Numéro de dépôt international: PCT/FR2008/052115
(87) Numéro de publication internationale: WO 2009/071827

(56) Documents cités:
- DE-A1- 10 153 578
- GB-A- 2 331 862
- US-A- 5 969 459
- US-A1- 2004 032 183
- US-B1- 6 252 330

## Description

L'invention concerne notamment un procédé de fabrication d'un rotor de machine électrique tournante, notamment un alternateur.

Le brevet FR 2 793 085 décrit un alternateur pour véhicule automobile, comprenant un stator et un rotor. Le rotor comporte un bobinage et deux roues polaires pourvues chacune d'une pluralité de griffes. Les roues définissent entre elles, au niveau des griffes, des espaces interpolaires pouvant recevoir chacun une structure à aimant permanent, notamment en terre rare. Le sens d'aimantation de ces structures à aimant doit être alternés d'un espace interpolaire au suivant. A cet effet, ces structures à aimant sont rangées dans deux groupes distincts, en fonction de leur sens d'aimantation. Cependant ces deux groupes ne peuvent pas être distingués visuellement. Ainsi lors du montage des structures à aimant dans les espaces interpolaires du rotor, des précautions particulières doivent être prises pour prélever les structures à aimant avec le sens d'orientation approprié.

Le brevet US 7 095 154 décrit un rotor d'alternateur comportant des aimants permanents maintenus dans des espaces interpolaires à l'aide d'éléments de support. Chacun des aimants est positionné de manière non-centrée dans l'espace interpolaire correspondant.

Le brevet US2004/032183 décrit un rotor comprenant des aimants permanents maintenus dans les espaces interpolaires. Chaque aimant présentant une ouverture d'indexation agencée contre une face latérale d'une roue polaire. Les marque d'indexation n'étant donc pas visible une fois l'aimant monté dans l'espace interpolaire.

Les brevets US6252330, DE10153578, US5969459 et GB2331862 décrivent chacun un rotor comprenant des aimants interpolaires.

L'invention vise notamment à simplifier le procédé de fabrication d'un rotor, tout en évitant des risques d'erreur de montage des structures à aimant.

L'invention a ainsi pour objet non revendiqué un procédé de fabrication d'un rotor de machine électrique tournante, notamment un alternateur, le rotor comprenant deux roues polaires définissant entre elles au moins un espace interpolaire agencé pour recevoir au moins une structure à aimant, laquelle comporte au moins une marque d'indexation, le procédé comportant l'étape suivante :
- disposer la structure à aimant contre l'une au moins des roues polaires, en se servant de la marque d'indexation pour repérer un sens d'orientation de l'aimantation de la structure à aimant.

La présence de marques d'indexation selon l'invention permet de réduire, voire annuler, le risque de montage des structures à aimant sur la roue polaire en les orientant suivant un sens d'aimantation erroné.

Ces marques d'indexation permettent en outre de vérifier rapidement si toutes les structures à aimant sont disposées correctement dans les espaces interpolaires.

Le cas échéant, les structures à aimant peuvent être posées sur la roue polaire toutes à l'endroit ou toutes à l'envers, et le collecteur est posé, à la fermeture du circuit électrique de la machine, dans une configuration adéquate en fonction de la position observée des structures à aimant.

L'invention est particulièrement bien adaptée à un procédé mis en œuvre manuellement.

Il est également possible de vérifier le circuit électromagnétique de la machine électrique en fin d'assemblage.

Dans un exemple de mise en oeuvre de l'invention, la structure à aimant est posée contre l'une des roues polaires, avant assemblage de celles-ci.

En variante, la structure à aimant est insérée dans l'espace interpolaire après assemblage des deux roues polaires.

La marque d'indexation de la structure à aimant est visible à l'œil nu, permettant par exemple à une personne de repérer une orientation d'aimantation de la structure à aimant.

Le cas échéant, pour magnétiser les structures à aimant, celles-ci sont disposées parallèlement, suivant une même orientation, lors de leur passage dans un dispositif de magnétisation.

L'invention permet ainsi d'éviter d'avoir à magnétiser les structures à aimant selon deux sens différents et donc de faire deux groupes d'aimants, ce qui simplifie le procédé.

De plus manipuler des structures à aimant toutes avec la même orientation d'aimantation par rapport à la marque d'indexation permet d'éviter des confusions lors des différentes étapes de la fabrication du rotor. Il est possible d'utiliser une seule référence de structures à aimant.

En variante, il est possible, pour magnétiser les structures à aimant, de disposer celles-ci parallèlement, suivant une orientation alternée, lors de leur passage dans un dispositif de magnétisation. Dans ce cas, deux références de structures à aimant peuvent être utilisées.

Dans un exemple, le rotor comporte une pluralité d'espaces interpolaires, chacun étant apte à recevoir au moins une structure à aimant, et le procédé comporte l'étape suivante :
- à partir d'un ensemble de structures à aimant toutes présentant des pôles Nord et Sud orientés de manière identique par rapport à la marque d'indexation correspondante, prélever et disposer une pluralité de structures à aimant sur l'une au moins des roues polaires dans les espaces interpolaires successifs, selon des orientations alternées d'un espace interpolaire à l'autre.

Le procédé peut comporter l'étape suivante :
- prélever et faire tourner la structure à aimant d'un angle choisi, notamment en se servant de la marque d'indexation comme repère, en vue de la mettre dans une position adéquate avant de la disposer contre l'une des roues polaires.

Les étapes ci-dessus peuvent être accomplies manuellement ou, en variante, à l'aide d'un robot muni d'un bras articulé.

L'invention a pour objet un rotor de machine électrique tournante selon la revendication 1, notamment un alternateur, notamment fabriquée par le procédé tel que défini ci-dessus, caractérisée par le fait qu'il comporte une structure à aimant comportant au moins une marque d'indexation agencée pour permettre de distinguer, visuellement, le sens d'aimantation de cette structure à aimant pour permettre de vérifier rapidement si les structures à aimant sont disposées correctement dans les espaces interpolaires.

Selon l'invention, la structure à aimant comporte une plaquette et un aimant disposé contre la plaquette, et la marque d'indexation est réalisée au moins partiellement sur la plaquette.

Cette plaquette sert notamment à retenir l'aimant et joue un rôle d'absorbeur mécanique.

Si on le souhaite, la marque d'indexation comporte au moins un orifice ou une découpe formé dans la plaquette.

La marque d'indexation peut comporter une sur-longueur de l'aimant dans le prolongement de la longueur de la plaquette, laquelle sur-longueur est présente uniquement sur un côté de la structure à aimant de manière à distinguer un côté de l'aimant de l'autre.

En variante, la plaquette peut présenter une sur-longueur par rapport à l'aimant.

Le cas échéant, la marque d'indexation est formée par au moins deux zones ayant des propriétés électromagnétiques, notamment optiques, différentes, étant par exemple de couleurs ou de propriétés réfléchissantes différentes.

Ces deux zones de propriétés optiques différentes peuvent s'étendre dans la longueur ou la largeur de la structure à aimant.

La marque d'indexation est formée, si on le souhaite, par une variation d'épaisseur de l'un de la plaquette et de l'aimant permanent.

Dans un exemple non revendiqué, la marque d'indexation est réalisée au moins partiellement sur l'aimant.

La marque d'indexation peut par exemple comporter un arrachement de matière, par exemple une entaille, sur l'aimant ou un signe imprimé sur cet aimant.

D'une manière générale, la marque d'indexation, qu'elle soit réalisée sur l'aimant ou la plaquette ou les deux à la fois, peut être formée de diverses manières, notamment en créant une discontinuité et/ou une dissymétrie, par exemple par découpe, entaille, impression d'une encre visible ou invisible à l'œil nu, apposition par exemple par collage d'un élément séparé tel qu'une pastille ou une étiquette, etc...

Dans un exemple de mise en oeuvre de l'invention, l'une au moins des structures à aimant présente une forme sensiblement parallélépipèdique rectangle ou, en variante, avoir une section transversale trapézoïdale.

Par exemple, la plaquette est fixée par collage sur l'aimant.

Toutes les structures à aimant présentent un même sens d'aimantation par rapport à la marque d'indexation.

De préférence, toutes les structures à aimant du rotor sont identiques.

Avantageusement la structure à aimant comporte un aimant permanent s'étendant sur toute une largeur de l'espace interpolaire.

L'invention a encore pour objet une machine électrique tournante, notamment un alternateur de véhicule automobile, comportant un rotor tel que précité.

L'invention pourra être mieux comprise à la lecture de la description détaillée qui va suivre, d'exemples de mise en œuvre non limitatifs de l'invention, et à l'examen du dessin annexé, sur lequel :
- la figure 1 représente, schématiquement et partiellement, en coupe longitudinale, un alternateur conforme à un exemple de mise en œuvre de l'invention,
- la figure 2 illustre schématiquement des étapes de fabrication d'un rotor de l'alternateur de la figure 1, et
- les figures 3 à 11 représentent, schématiquement et partiellement, des exemples de structures à aimant

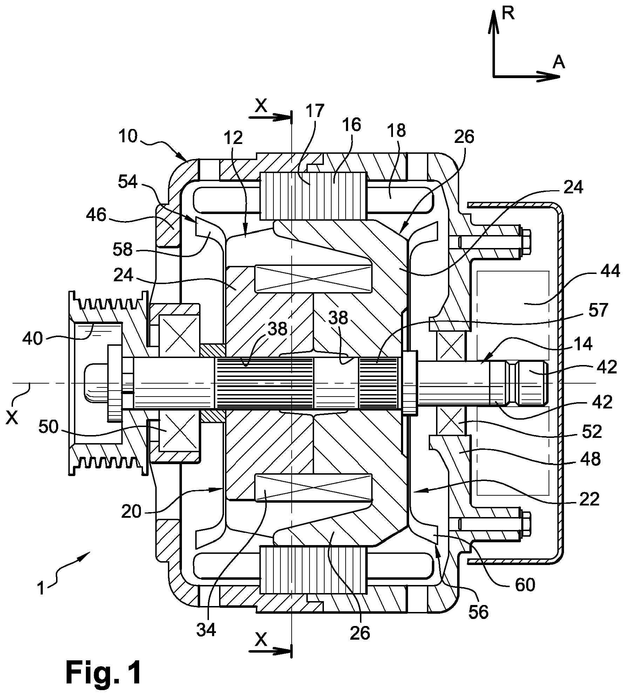

Dans la suite de la description, les flèches "A" et "R" de la figure 1 indiquent respectivement des directions axiale et radiale.

On a représenté sur la figure 1 une machine électrique tournante polyphasée 1 formant, dans le présent exemple de mise en œuvre de l'invention, un alternateur pour véhicule automobile. Bien entendu, la machine électrique 1 peut, si on le souhaite, être réversible et former un alterno-démarreur pouvant fonctionner en mode moteur électrique pour démarrer le moteur à combustion du véhicule et en mode alternateur pour produire de l'énergie électrique.

Cette machine 1 comporte un carter 10 et, à l'intérieur de celui-ci, un rotor 12 solidaire en rotation d'un arbre rotatif 14 d'axe X, appelé arbre de rotor, et un stator 16 qui entoure le rotor 12.

Le stator 16 comporte un corps 17 formé d'un paquet de tôles doté d'encoches pour le montage d'un bobinage de stator 18 formant des chignons de part et d'autre du corps de stator 17.

Le rotor 12 comprend deux roues polaires 20 et 22, pourvues chacune d'un flasque transversal 24 sur la périphérie duquel se raccordent une pluralité de griffes 26 s'étendant sensiblement suivant la direction axiale A.

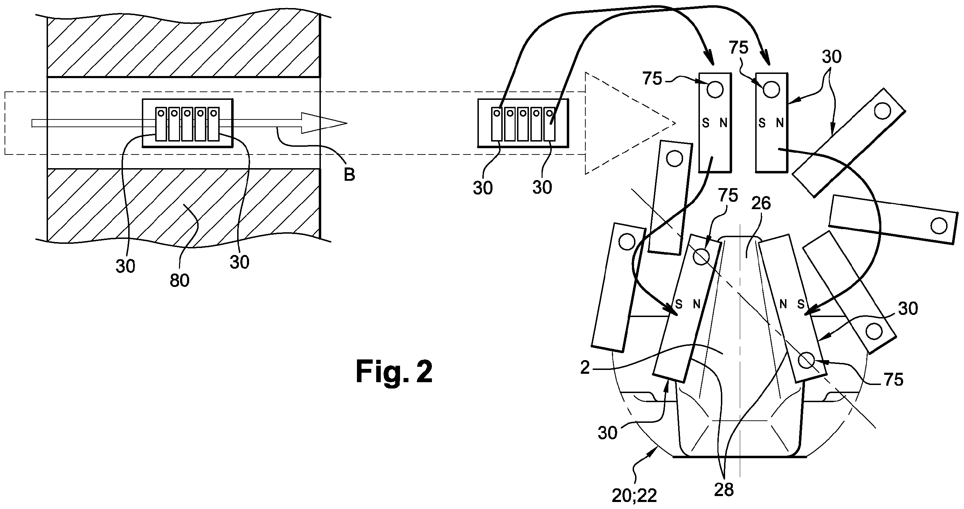

Chacune des griffes 26 présente globalement une forme trapézoïdale lorsqu'elle est observée suivant une direction radiale R, comme on peut le voir sur la figure 2 notamment.

Les griffes 26 d'une roue polaire forment avec les griffes 26 de l'autre roue polaire des espaces interpolaires 28 agencés pour recevoir chacun une structure à aimant 30.

Un bobinage d'excitation 34 est mis en place entre les flasques 24 des roues polaires 20 et 22.

Chaque roue polaire 20 ; 22 comporte un alésage formant un passage intérieur 38 pour recevoir l'arbre 14.

Les roues polaires 20 et 22 sont réalisées par exemple en acier.

L'arbre 14 porte à son extrémité avant une poulie 40 appartenant à un dispositif de transmission de mouvement par l'intermédiaire d'au moins une courroie (non représentée) entre l'alternateur 1 et le moteur à combustion du véhicule automobile, et à son extrémité arrière des bagues collectrices 42 reliées par des liaisons filaires (non représentées) au bobinage d'excitation 34 du rotor 12.

Des balais d'un porte-balais 44 représenté de manière très schématique sont disposés de façon à frotter sur les bagues collectrices, afin d'alimenter le bobinage 34 en courant électrique.

Lorsque l'arbre 14 est en rotation et le bobinage d'excitation 34 activé par une alimentation électrique, le rotor inducteur 12 crée un courant induit alternatif dans le stator 16.

Le carter 10 comporte, dans l'exemple considéré, deux parties, à savoir un palier avant 46 et un palier arrière 48 portant le porte-balais 44.

Les paliers 46 et 48 portent chacun un roulement à billes respectivement 50 et 52 pour le montage à rotation de l'arbre 14.

L'alternateur 1 comporte également des moyens pour son refroidissement.

Par exemple, comme illustré à la figure 1, les paliers 46 et 48 sont ajourés pour permettre le refroidissement de l'alternateur par circulation d'air.

Le rotor 12 porte, dans l'exemple décrit, au moins à l'une de ses extrémités axiales un ventilateur destiné à assurer une circulation de l'air. Un premier élément de ventilation 54 est par exemple prévu sur la face transversale avant du rotor 12 et un deuxième élément de ventilation 56 est prévu sur la face arrière du rotor 12. Chaque élément de ventilation 54 et 56 est pourvu d'une pluralité de pâles 58 et 60.

Dans l'exemple de réalisation décrit, chaque roue polaire 20 ; 22 comporte six griffes 26 de manière à définir un rotor avec 12 espaces interpolaires 28.

En variante, le rotor 12 peut comporter 2, 4, 6, 8 ou 10 espaces interpolaires 28, en fonction du type de machine électrique souhaité.

On va maintenant décrire notamment en référence à la figure 2 différentes étapes de fabrication du rotor 12, notamment en liaison avec le montage des structures à aimant 30 dans les espaces interpolaires 28.

Chaque structure à aimant 30 comprend un aimant permanent 70, par exemple en terre rare, et une plaquette 71 réalisée en matériau amagnétique, par exemple en matériau composite contenant des fibres de verre.

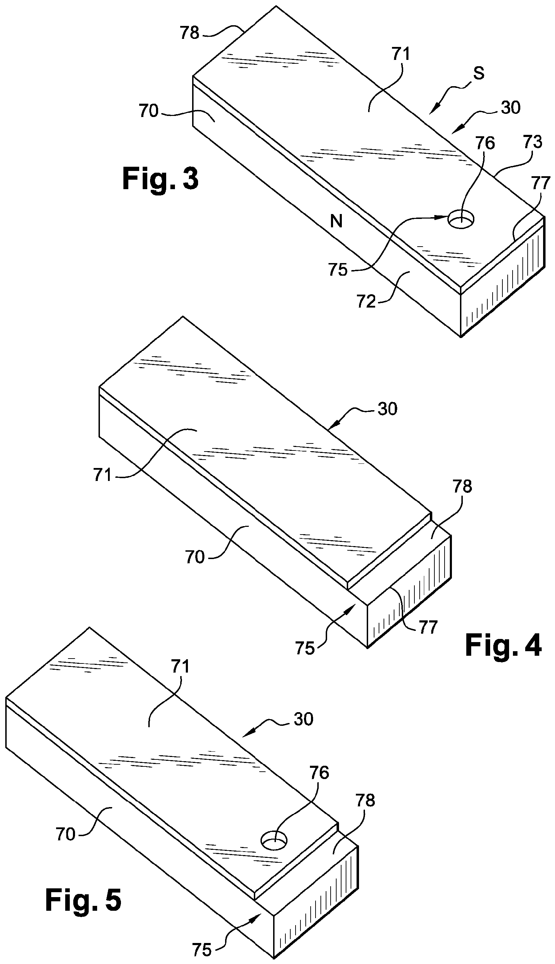

Dans l'exemple considéré, illustré à la figure 3, l'aimant permanent 70 présente une forme sensiblement parallélépipédique rectangle.

Cette forme de l'aimant présente une invariance par une rotation d'un angle de 180° de sorte qu'il est impossible de distinguer visuellement une face latérale 72 de polarité Nord et une face latérale opposée 73 de polarité Sud, après que l'aimant 70 ait pris son aimantation.

Dans le procédé illustré à la figure 2, les structures à aimant 30 sont passés dans un dispositif de magnétisation 80 agencé pour magnétiser les aimants 70 des structures 30 à l'aide d'un champ magnétique représenté par une flèche B.

Après ce passage, chaque aimant 70 présente des polarités Nord et Sud respectivement sur ses faces opposées 72 et 73.

Les structures à aimant 30 passe dans le dispositif 80 par Iot, en étant alignées parallèlement.

Dans l'exemple décrit, la plaquette 71 présente une forme rectangulaire et recouvre entièrement une face de l'aimant permanent 70, cette plaquette 71 étant fixée sur l'aimant 70 avant passage dans le dispositif de magnétisation 80.

Afin de permettre la distinction visuelle entre les faces 72 (Nord) et 73 (Sud) de l'aimant 70, et donc la reconnaissance du sens d'aimantation de cet aimant 70, chaque structure à aimant 30 comporte une marque d'indexation 75.

Dans l'exemple illustré en référence à la figure 3, la marque d'indexation 75 comporte un orifice 76 formé dans la plaquette 71, plus proche d'une extrémité axiale 77 que de l'autre extrémité 78.

Ainsi, en vue de déposer sur l'une des roues polaires 20 ; 22 les structures à aimant 30, en alternant le sens d'aimantation des aimants 70 d'un espace interpolaire au suivant, il est possible de se servir de la marque d'indexation 75 pour repérer visuellement un sens d'orientation de l'aimantation de la structure 30.

Par exemple, pour une première structure à aimant 30 à déposer dans un premier espace interpolaire 28, celle-ci est orientée de manière à ce que la marque d'indexation 75 soit radialement intérieure, et, pour une deuxième structure à aimant 30 à déposer dans un deuxième espace interpolaire 28, cette structure 30 est tournée pour la disposer avec la marque d'indexation située extérieurement (voir figure 2).

L'invention permet ainsi d'éviter des erreurs dans l'orientation de l'aimantation des structures 30, ce qui est particulièrement avantageux lorsque ces structures 30 sont mises en place de façon manuelle, l'opérateur s'aidant de la marque d'aimantation pour orienter les structures 30.

Il est à noter que les structures à aimant 30 sont fixées sur l'une des roues polaires 20 ; 22 avant assemblage de cette roue avec l'autre roue polaire.

Ces structures à aimant 30 sont solidarisées à la roue polaire par aimantation, avant d'être enserrées entre les deux roues polaires 20 et 22.

Dans l'exemple qui vient d'être décrit, la plaquette 71 recouvre entièrement une face de l'aimant 70.

En variante, comme illustré sur la figure 4, l'aimant 70 présente une sur-longueur 78 par rapport à la plaquette 71 dans la direction longitudinale, sur une extrémité axiale 77.

Cette sur-longueur forme ainsi une marque d'indexation 75 au sens de l'invention, servant pour repérer un sens d'orientation de l'aimantation de la structure à aimant 30.

La plaquette 71 peut ainsi être pleine, sans orifice, ce qui permet notamment de simplifier sa fabrication au niveau des opérations de coupe.

En variante, comme illustré sur la figure 5, la structure à aimant 30 présente en plus de la sur-longueur 78, un orifice 76 en vue de distinguer les côtés de la structure 30 de manière redondante.

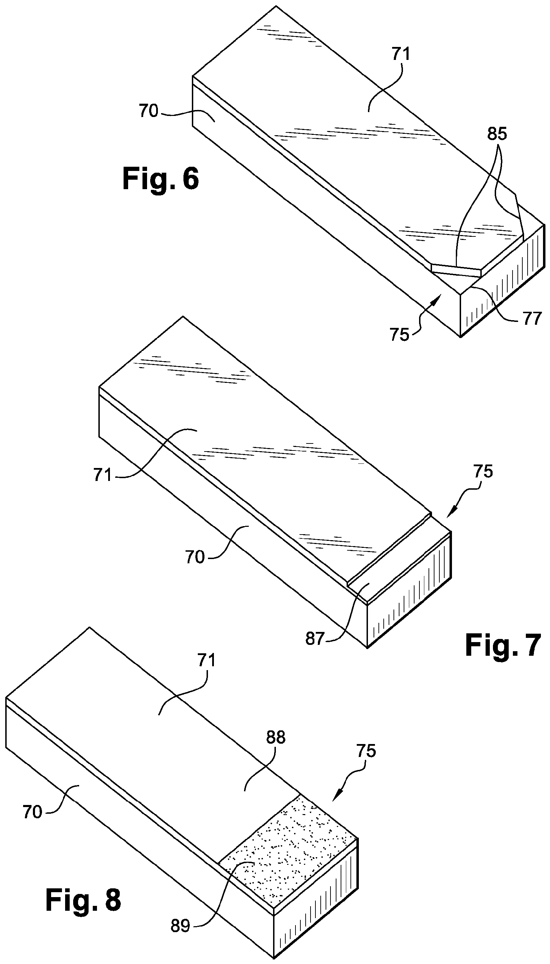

Dans l'exemple illustré à la figure 6, la plaquette 71 présente une longueur égale à celle de l'aimant 70, avec des découpes 85 sur un côté axial de manière à former une marque d'indexation 75. Lorsque les découpes permettent de vérifier rapidement, à l'œil nu, si les structures à aimant sont disposées correctement dans les espaces interpolaires.

Ces découpes 85 présentent par exemple une forme triangulaire.

Bien entendu, ces découpes peuvent présenter toutes autres formes appropriées.

Par exemple, la plaquette 71 peut présenter une seule découpe arrondie formée sur le milieu d'un bord de la plaquette 71.

Dans l'exemple illustré à la figure 7, la plaquette 71 comporte une portion d'épaisseur réduite 87, s'étendant sur un côté axial de l'aimant 70.

Cette portion 87 forme une marque d'indexation 75 au sens de l'invention.

Dans les exemples qui viennent d'être décrits, la marque d'indexation 75 est formée par des formes et/ou dimensions de la plaquette 71.

Bien entendu, on ne sort pas du cadre de la présente invention lorsque la marque d'indexation est formée par d'autres moyens.

Comme illustré sur la figure 8, la marque d'indexation 75 est formée par au moins deux zones ayant des propriétés optiques différentes, étant notamment de couleurs ou de propriétés réfléchissantes différentes

Dans l'exemple considéré, la plaquette 71 comporte deux zones 88 et 89, par exemple rectangulaires, de superficies différentes, et présentant des couleurs différentes.

Ces zones 88 et 89 s'étendent suivant une largeur de la structure à aimant.

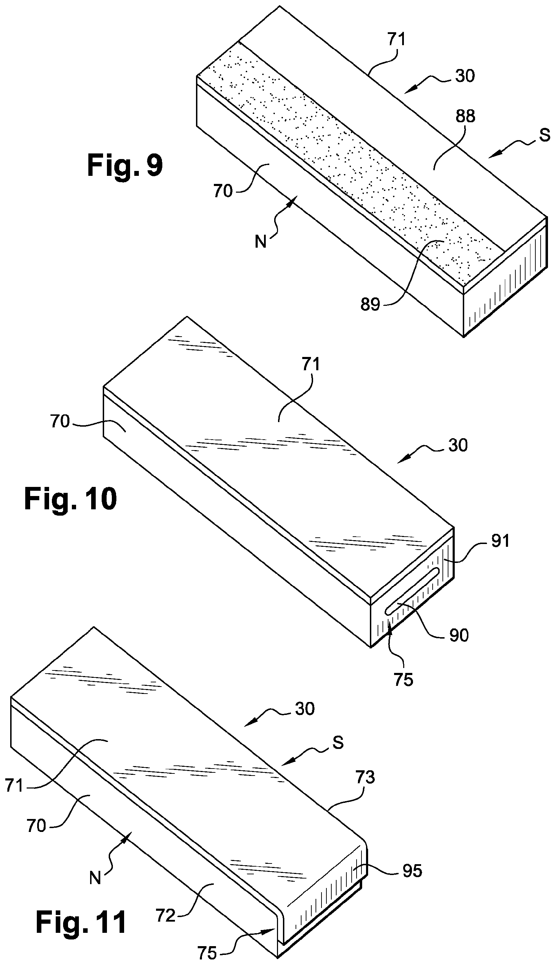

En variante, comme illustré sur la figure 9, les zones 88 et 89 de superficie identique s'étendent suivant une longueur de la structure.

Par exemple, le côté Nord (N) peut être associé à une première couleur de la zone 89 et le côté Sud (S) à une deuxième couleur, différente de la première couleur, de la zone 88.

Lors de la pose des structures sur une roue polaire, il est possible de disposer les structures à aimant de manière à ce que tous les côtés de la même couleur soient sur la roue polaire.

La marque d'indexation 75 peut, si on le souhaite, être formée sur l'aimant 70, et non sur la plaquette 71.

La structure à aimant 30 de la figure 10 est un exemple non revendiqué d'un marque d'indexation comportant un aimant 70 et une plaquette 71 recouvrant entièrement une face de cet aimant 70.

Une marque d'indexation 75 est réalisée sur une face d'extrémité axiale 91 sous la forme d'une entaille 90.

Cette entaille 90 présente par exemple une forme rectiligne.

En variante, toute autre forme appropriée de l'entaille 90 peut être envisagée.

Par exemple, l'entaille peut être circulaire.

Bien entendu, l'invention n'est pas limitée aux exemples de mise en œuvre qui viennent d'être décrits.

Par exemple, l'aimant 70 peut présenter une forme avec, symétriquement sur ses deux extrémités axiales opposées, des coins arrondis.

La plaquette 71 peut, si on le souhaite, recouvrir au moins deux faces de l'aimant 70.

Par exemple, comme illustré sur la figure 11, la plaquette 71 présente une portion 95 repliée à angle droit et recouvrant une face radiale de l'aimant permanent 70. Cette face peut être une face avant ou arrière de l'aimant.

Cette portion 95 sert à définir une marque d'indexation 75 non-revendiquée au sens de l'invention.

## Revendications

1. Rotor (12) de machine électrique tournante, notamment un alternateur de véhicule automobile, comportant :
- deux roues polaires (20, 22), pourvues chacune d'un flasque transversal (24) sur la périphérie duquel se raccordent une pluralité de griffes (26) s'étendant sensiblement suivant une direction axiale (A), les griffes d'une roue polaire formant avec les griffes de l'autre roue polaire des espaces interpolaires (28) et
- une pluralité de structures à aimant (30) étant montées dans les espaces interpolaires (28), les espaces interpolaires étant agencés pour recevoir chacun une structure à aimant (30) ;
le rotor étant **caractérisé en ce que** chaque structure à aimant (30) comporte au moins une marque d'indexation (75) agencée pour permettre de distinguer visuellement à l'œil nu le sens d'aimantation de cette structure à aimant et pour permettre de vérifier rapidement si les structures à aimant sont disposées correctement dans les espaces interpolaires (28), toutes les structures à aimant (30) présentant un même sens d'aimantation par rapport à la marque d'indexation (75), et **en ce que** chaque structure à aimant (30) comporte une plaquette (71) et un aimant (70) disposé contre la plaquette, la marque d'indexation (75) étant réalisée au moins partiellement sur la plaquette.

2. Rotor selon la revendication précédente, **caractérisé en ce que** la marque d'indexation (75) comporte au moins un orifice (76) formé dans la plaquette (71).

3. Rotor selon l'une quelconque des revendications précédentes, **caractérisé en ce que** la marque d'indexation (75) comporte une sur-longueur (78) de l'aimant dans le prolongement de la longueur de la plaquette.

4. Rotor selon la revendication 1, **caractérisé en ce que** la marque d'indexation (75) est formée par une variation d'épaisseur de la plaquette (71) ou de l'aimant permanent (70).

5. Rotor selon la revendication 1, **caractérisé par le fait que** la marque d'indexation (75) est formée par au moins deux zones (88, 89) ayant des propriétés optiques différentes, étant notamment de couleurs différentes.

6. Rotor selon l'une quelconque des revendications précédentes, **caractérisé par le fait que** les structures à aimant présentent une forme sensiblement parallélépipédique rectangle.

7. Rotor selon l'une quelconque des revendications précédentes, **caractérisé par le fait que** toutes les structures à aimant sont identiques.

8. Machine électrique tournante, notamment un alternateur (1) de véhicule automobile, comportant un rotor selon l'une quelconque des revendications précédentes.

## Patentansprüche

1. Rotor (12) einer drehenden elektrischen Maschine, insbesondere eines Wechselstromgenerators eines Kraftfahrzeugs, der Folgendes umfasst:
- zwei Polräder (20, 22), die jeweils mit einem quer verlaufenden Flansch (24) versehen sind, an dessen Umfang sich eine Vielzahl von Klauenpolen (26) anschließen, die sich im Wesentlichen gemäß einer Richtung (A) erstrecken, wobei die Klauenpole eines Polrades mit den Klauenpolen des anderen Polrades Pollücken (28) bilden, und
- eine Vielzahl von Magnetstrukturen (30), die in den Pollücken (28) montiert sind, wobei die Pollücken so eingerichtet sind, dass sie jeweils eine Magnetstruktur (30) aufnehmen;
wobei der Rotor **dadurch gekennzeichnet ist, dass** jede Magnetstruktur (30) mindestens eine Indexierungsmarkierung (75) umfasst, die eingerichtet ist, um ein visuelles Erkennen der Magnetisierungsrichtung dieser Magnetstruktur mit dem bloßen Auge zu ermöglichen und um ein schnelles Überprüfen, ob die Magnetstrukturen korrekt in den Pollücken (28) angeordnet sind, zu ermöglichen, wobei alle Magnetstrukturen (30) mit Bezug auf die Indexierungsmarkierung (75) eine gleiche Magnetisierungsrichtung aufweisen, und dadurch, dass jede Magnetstruktur (30) ein Plättchen (71) und einen an dem Plättchen angeordneten Magneten (70) umfasst, wobei die Indexierungsmarkierung (75) mindestens teilweise an dem Plättchen implementiert ist.

2. Rotor nach dem vorhergehenden Anspruch, **dadurch gekennzeichnet, dass** die Indexierungsmarkierung (75) mindestens eine in dem Plättchen (71) gebildete Öffnung (76) umfasst.

3. Rotor nach einem der vorhergehenden Ansprüche, **dadurch gekennzeichnet, dass** die Indexierungsmarkierung (75) in der Verlängerung der Länge des Plättchens eine Überlänge (78) des Magneten umfasst.

4. Rotor nach Anspruch 1, **dadurch gekennzeichnet, dass** die Indexierungsmarkierung (75) durch eine Variation der Dicke des Plättchens (71) oder des Dauermagneten (70) gebildet ist.

5. Rotor nach Anspruch 1, **dadurch gekennzeichnet, dass** die Indexierungsmarkierung (75) durch mindestens zwei Bereiche (88, 89) gebildet ist, die unterschiedliche optische Eigenschaften aufweisen, insbesondere von unterschiedlicher Farbe sind.

6. Rotor nach einem der vorhergehenden Ansprüche, **dadurch gekennzeichnet, dass** die Magnetstrukturen eine im Wesentlichen rechteckige, parallelepipedische Form aufweisen.

7. Rotor nach einem der vorhergehenden Ansprüche, **dadurch gekennzeichnet, dass** alle Magnetstrukturen identisch sind.

8. Drehende elektrische Maschine, insbesondere ein Wechselstromgenerator (1) eines Kraftfahrzeugs, die einen Rotor nach einem der vorhergehenden Ansprüche umfasst.

## Claims

1. Rotor (12) for a rotary electric machine, notably a motor vehicle alternator, comprising:
- two pole wheels (20, 22) each provided with a transverse flange (24) to the periphery of which are connected a plurality of claws (26) extending substantially in an axial direction (A), the claws of one pole wheel forming with the claws of the other pole wheel inter-polar spaces (28), and
- a plurality of magnet-comprising structures (30) being mounted in the inter-pole spaces (28), the inter-pole spaces being designed to each accept one magnet-comprising structure (30);
the rotor being **characterized in that** each magnet-comprising structure (30) comprises at least one indexing mark (75) designed to make it possible to distinguish visually with the naked eye the direction of magnetization of this magnet-comprising structure and make it possible to verify quickly whether the magnet-comprising structures have been positioned correctly in the inter-polar spaces (28), all the magnet-comprising structures (30) having the same one direction of magnetization with respect to the indexing mark (75), and **in that** each magnet-comprising structure (30) comprises a plate (71) and a magnet (70) positioned against the plate, the indexing mark (75) being produced at least partially on the plate.

2. Rotor according to the preceding claim, **characterized in that** the indexing mark (75) comprises at least one orifice (76) formed in the plate (71).

3. Rotor according to either one of the preceding claims, **characterized in that** the indexing mark (75) comprises an overlength (78) of the magnet in the continuation of the length of the plate.

4. Rotor according to Claim 1, **characterized in that** the indexing mark (75) is formed by a variation in the thickness of the plate (71) or of the permanent magnet (70) .

5. Rotor according to Claim 1, **characterized in that** the indexing mark (75) is formed by at least two regions (88, 89) having different optical properties, and notably being of different colours.

6. Rotor according to any one of the preceding claims, **characterized in that** the magnet-comprising structures have a substantially rectangular parallelepipedal shape.

7. Rotor according to any one of the preceding claims, **characterized in that** all the magnet-comprising structures are identical.

8. Rotary electrical machine, notably a motor vehicle alternator (1), comprising a rotor according to any one of the preceding claims.
